# EUROPEAN PATENT APPLICATION

(11) **EP 4 554 056 A1**
(43) Date of publication of application: **14.05.2025**
(21) Application number: 23209414.4
(22) Date of filing: 13.11.2023
(51) Int. Cl.: H02K 3/18, H02K 3/52, H02K 15/00, H02K 21/24, H02K 3/28

(54) **STATOR FOR AN AXIAL FLUX MACHINE**

(71) Applicant: Alvier Mechatronics AB, 25236 Helsingborg (SE); Alvier Mechatronics GmbH, 38642 Goslar (DE)
(72) Inventor: Nilsson, Johan, 15000 Prague (CZ)
(74) Representative: Höganäs AB (publ)

(57) **Abstract**

Stator for an axial flux machine, comprising coil elements arranged on a circle defining an axial direction, wherein each coil element comprises one or more windings and two terminal contacts to supply a current to each of the coil elements to generate a magnetic field in the axial direction for interaction with a rotor of the axial flux machine, wherein one or more terminal contacts of a plurality of coil elements are arranged in the same axial direction to be connected to another coil element and/or a busbar.

## Description

The present invention relates to a stator for an axial flux machine and an axial flux machine comprising such a stator. Further, the present invention relates to an assembly jig for manufacturing of such a stator and a method of manufacturing a stator for an axial flux machine.

Axial flux machines or axial motors become more and more prominent with the increase of electrical mobility since they provide compact and efficient electric drives. Axial flux machines comprise a plurality of coil elements arranged on a circle around the axis of rotation of the axial flux machine. By the coil elements a magnetic field is generated and interacting with a rotor which is arranged axially next to the coil elements of the stator.

Therein, the position accuracy of the coil elements contributing to the efficiency of the axial flux machine and may reduce disadvantageous effects such as vibration, magnetic stray fields, or the like. However, currently manufacturing of stators for axial flux machines are mainly done by hand. Hence, precision of the positioning of the coil elements depends on the experience of the respective worker and deviations, as well as small imperfections of the positioning of the coil elements in the stator are usually present.

The stator for an axial flux machine comprises numerous elements which need to be electrically connected to each other, for example by welding. However, the process of welding is complex and can only be undertaken by machines with difficulty and high costs due to complexity of the task.

Hence, it is an object of the present invention to provide a stator for an axial flux machine that can be easily manufactured, in particular in an automated manufacturing process.

The problem is solved by a stator according to claim 1, an axial flux machine according to claim 9, an assembly jig according to claim 11 and a method for manufacturing according to claim 12.

In an aspect of the present invention, a stator for an axial flux machine is provided. The stator comprises coil elements arranged on a circle defining an axial direction. Therein, the axial direction may coincide with the axis of rotation of the axial flux machine. In particular, the stator may comprise two or more coil elements, preferably five or more coil elements and more preferably 10 or more coil elements, wherein each coil element comprises one or more windings and two terminal contacts to supply a current to each of the coil elements to generate a magnetic field preferably in the axial direction for interaction with a rotor of the axial flux machine. The coil elements are built by a conductive wire or conductor which is formed into the windings of the coil element. The conductive wire or conductor may be surrounded by an insulator or may be covered by an insulating layer in order to avoid shorts between the windings and also maybe between neighboring coil elements. Therein, at the terminal contacts of the coil elements, no insulator is present such that the coil elements can be electrically connected either to other coil elements or a busbar. Further, the one or more windings of each coil element may be wound around a central opening, wherein the opening of each coil element is arranged in the axial direction. The magnetic field is generated along this opening. Each coil element may have a circular shape or a shape deviating from a circle, i.e. a narrower radially inner part and a wider radially outer part such that the coil elements can be arranged in close proximity on the circle. In particular, the opening may be filled by a magnetic material in order to provide a yoke. Preferably, all coil elements are formed identical or at least two coil elements are formed different. Therein, the position of the coil elements, the number of windings of each coil element, the form of each coil element can be tailored to the specific application in order to provide an efficient and compact axial flux machine.

According to the present invention, one or more terminal contacts of a plurality of coil elements are arranged in the same axial direction to be connected to another coil element and/or a busbar. Preferably, both terminal contacts of each of the plurality of coil elements are arranged in the same axial direction. Additionally, or alternatively, one or more terminal contacts of all coil elements are arranged in the same axial direction. More preferably, both terminal contacts of all coil elements are arranged in the same axial direction. Hence, the terminal contacts of a plurality of coil elements are accessible from the same side of the stator and can be connected either to terminal contacts of other coil elements and/or a busbar from the same side, thereby the step of connecting these terminal contacts is facilitated and automated connection the terminal contacts is feasible. Connection of the terminal contacts to terminal contacts of other coil elements and/or a busbar may be performed by welding, fusing, brazing, pressing, soldering, clamping by additional clamping elements, such as rings, or the like. All these connecting methods require additional tools. Since the terminal contacts are arranged in the same axial direction, these tools can approach the stator during manufacturing from the same axial side. Complex routing and/or complex movement of the stator during the manufacturing process in order to gain access of the tools to the terminal contacts can be prevented. The manufacturing process is simplified, time of manufacturing can be shortened and automated manufacturing is feasible.

Preferably, one or more busbars are arranged radially outside or radially inside the coil elements, wherein each busbar has two terminal contacts, wherein at least one terminal contact of one or more busbar is arranged in the same axial direction as the terminal contacts of the coil elements. Hence, also the busbars can be easily connected to the terminal contacts of the coil elements in the same manufacturing step. Complex rooting of the terminal contacts of the busbars can be prevented and a simplified connection of the busbars to the coil elements is possible.

Preferably, the one or more busbars are arranged in a plurality of radial layers radially outside or radially inside the coil elements. Thus, by the busbars arranged in the radial layers, routing of the busbars is simplified, wherein at the same time a compact stator can be provided. In particular, the plurality of busbars does not prevent placement of the rotor of the axial flux machine in close proximity to the axial end of the stator.

Preferably, the one or more busbars are arranged in a plurality of axial columns radially outside or radially inside the coil elements. Thus, by the busbars arranged in the axial columns, routing of the busbars is simplified, wherein at the same time a compact stator can be provided. In particular, the plurality of busbars does not prevent placement of the rotor of the axial flux machine in close proximity to the axial end of the stator.

Preferably, the busbars can be placed in an axial direction. Therein, the axial direction of placement might be the same axial direction in which the terminal contacts of the busbar and/or the coil elements are arranged. Thus, automated placement of the busbars is feasible. In particular, first busbars along a column are placed in different layers staring from the most inner layer to the outside (or the other way around, if the busbars are placed radially inside the coil elements) before placing busbars in the next/ axially neighboring column. Thereby, Axial positioning of the busbars is possible without blocking each other. Routing of the busbars is simplified and automated assembly is possible.

Preferably, a gap or channel is present between at least two and more preferably each neighboring coil elements. Therein, the gap or channel may run along a radial direction and separates the coil elements in a circumferential direction. In particular, there is no direct contact between neighboring coil elements. Thus, by the one or more gaps or channels the overall diameter of the coil elements may be increased. By the gaps or channels a coolant such as oil can flow in between the coil elements for active cooling.

Preferably, a gap or channel is present in between the coil elements and the busbars. In particular, there is no direct contact between the busbars and the coil elements separated by the gap or channel. By the gaps or channels a coolant such as oil can flow in between the coil elements and the busbars for active cooling.

Preferably, the terminal contacts of the busbars and/or the coil elements extend in the axial direction beyond the axial extension of the coil elements or axially terminate within the axial extension of the coil elements. In particular, if the terminal contacts of the coil elements and busbars axially terminal within the axial extension of the coil elements, the terminal contacts can be placed in between the two rotor elements on both axial sides of the stator.

Preferably, the terminal contacts of the busbars and/or the coil elements terminate at the same axial position. In other words, the terminal contacts extend by the same amount, such that the terminal contacts can be connected to each other at their respective axial ends.

Preferably, at least two terminal contacts are arranged next to each other and in direct contact. Since the terminal contacts are arranged directly next to each other and in direct contact, connection of these two terminal contacts is easily possible, in particular in an automated process. Therein, the at least two terminal contacts may include two terminal contacts of adjacent coil elements, of two different busbars or at least one terminal contact of a coil element and at least one terminal contact of a busbar. Direct contact may be in the radial direction or along a perimeter.

Preferably, a plurality of terminal contacts is arranged on the same radius. In particular, if the terminal contacts are arranged adjacent to each other, the terminal contacts may be arranged along a perimeter of a circle described by the radius on which the plurality of terminal contacts are arranged. Hence, also the tool for connecting the plurality of terminal contacts can be arranged on the same radius in order to reach the terminal contacts and connect them to each other. Alternatively, or additionally, a plurality of terminal contacts are arranged on adjacent radii. Thus, the terminal contacts, when arranged adjacent to each other and in direct contact with each other, are arranged radially next to each other and thus, can be easily connected by a respective tool.

Preferably, the terminal contacts of the busbars and/or the terminal contacts of the coil elements are arranged radially outside of the coil elements. In particular, the terminal contacts of the plurality of coil elements and/or the terminal contacts of the busbars are arranged radially next to and outside of the rotor of the axial flux machine including the present stator. Hence, the terminal contacts do not occupy building room of the rotor and/or the stator and can be conveniently placed outside the rotor of the axial flux machine. Thus, the rotor can be placed in close proximity to the coil elements in order to maximize the magnetic field interaction.

Preferably, the terminal contacts of the busbars and/or the terminal contacts of the coil elements are arranged radially inside of the coil elements. In particular, the terminal contacts of the plurality of coil elements and/or the terminal contacts of the busbars are arranged radially next to and inside of the rotor of the axial flux machine including the present stator. Hence, the terminal contacts do not enlarge the space of the stator in a radial direction and a compact axial flux machine can be built. Thus, the rotor can be placed in close proximity to the coil elements in order to maximize the magnetic field interaction.

Preferably, one or more coil elements comprise a contact element for each terminal contact of the coil element. The contact element comprises a radial section and an axial section such that the axial section of the contact element is providing the respective terminal contact. By the radial section, the terminal contacts starting from the windings are guided in a radial direction away from the center of the stator and then turned into the axial section such that the terminal contact of the one or more coil elements are arranged in the axial direction.

Preferably, a gap is present between the contact element and the windings of the coil element. In particular, the axial section of the contact element is not in contact with the winding. Thus, a coolant can flow through the gap is enabled in order to cool the coil elements.

Preferably, the electric wire or conductor forming the coil elements is non-circular and in particular may have a cubic cross-section. Thereby, positioning of the windings of each coil element can be placed in high accuracy and close proximity without increase of the cross-section of the electric wire or conductor to be able to deal with the necessary high currents in the axial flux machine.

In an aspect of the present invention, an axial flux machine is provided comprising a stator as described before and a rotor arranged axially next to the stator, wherein the magnetic field of the stator generated by the coil elements interacts with the magnetic field of the rotor in order to rotate the rotor. Preferably, the stator comprises a central opening, wherein a rotor hub is arranged in the central opening and a rotor element is connected to the rotor hub extending radially and being arranged axially next to the stator. Thus, a compact axial flux machine can be provided, wherein the central opening of the stator is able to receive the rotor hub without the need to reserve room for the connection of the coil elements to provide a current to the coil elements.

Preferably, two rotor elements are connected to the rotor hub, wherein one rotor element is arranged on each axial side of the stator. Hence, the magnetic field generated by the stator is interacting simultaneously with the magnetic field of each rotor element on both axial sides of the stator increasing the efficiency of the axial flux machine.

In an aspect of the present invention, an assembly jig for manufacturing of a stator is provided. In particular, the assembly jig is provided to assemble a stator as described before. The assembly jig comprises a base element having a first side and an opposite second side, wherein the first side comprises receptacles to receive a plurality of coil elements in a predetermined arrangement along a circle. Therein, the circle has an axial direction coinciding with the axial direction of the stator and the rotational axis of the axial flux machine. Further, the base element comprises through-holes from the first side to the second side to receive terminal contacts of one or more of the plurality of coils. Therein, the terminal contacts extend from the first side to the second side in an axial direction and are connected to each other and/or one or more busbars at the second side. Hence, by the assembly jig position accuracy of the individual coil elements is provided, wherein electrical connection of the coil elements can be facilitated easily from the second side of the assembly jig without the need of turning the stator during manufacturing. In other words, all terminal contacts to be connected to each other and/or two terminal contacts of the one or more busbars may be accessible for a tool from the same side.

Preferably, the base element has a circular shape or a disc shape such that the coil elements can be arranged on a circle on the first side of the base element.

Preferably, the through-holes of the base element also allow terminal contacts of one or more busbars to extend through and be placed radially outside of the coil elements such that connection of the busbars to the respective terminal contacts of the coil elements is feasible also from the second side of the assembly jig.

Preferably, a plurality and more preferably all through-holes of the base element are arranged on the same radius. Hence, accessibility of the terminal contacts on the second side of the assembly jig is simplified.

Preferably, the radius on which the through-holes are arranged in the base element is larger than the radius of the rotor of the axial flux machine. Hence, the terminal contacts are arranged radially outside of the rotor of the axial flux machine. Alternatively, the radius on which the through-holes are arranged in the base element is smaller than the inner radius of the stator. Hence, the terminal contacts are arranged radially inside of the stator of the axial flux machine.

In an aspect of the present invention, a method for manufacturing a stator of an axial flux machine is provided including:
providing coil elements and arranging the coil elements on a circle defining an axial direction, wherein each coil element comprises one or more windings and two terminal contacts, wherein one or more terminal contacts of a plurality of coil elements are arranged in the same axial direction; and
connecting the terminal contacts of the plurality of coil elements to each other and/or to one or more busbars from the same side.

Preferably, connecting the terminal contacts of the plurality of coil elements to each other and/or to one or more busbars from the same side is performed welding, fusing, brazing, pressing, soldering, clamping by additional clamping elements, such as rings, or the like.

Preferably, the stator is only rotated around an axial axis during connection of the terminal contacts. Complex movement of the stator during manufacturing is not necessary since the terminal contacts to be connected with each other are arranged on the same axial side and preferably, on the same radius. Therein, the axial access refers to the axial axis of the stator and in particular also refers to the axis of rotation of the axial flux machine.

Preferably, after connection of the terminal contacts the terminal contacts are covered by an insulator. Thus, shorts are prevented and corrosion at the terminal contacts are minimized. Therein, the insulator may be a plastic material such as an epoxy or the like.

Preferably, after connecting the terminal contacts, the plurality of coil elements are connected to a support structure. Therein, by the support structure the relative position of the coil elements relative to each other can be fixed. Therein, the support structure may be provided by a cured polymer, wherein the stator is immersed in the polymer that is subsequently cured.

Preferably, before connecting the terminal contacts, one or more busbars are provided and terminal contacts of the busbars are arranged in the same axial direction as the terminal contacts of the coil elements, wherein the terminal contacts of the busbar are arranged adjacent to and in contact with respective terminal contacts of the plurality of coil elements. Hence, connection of the terminal contacts of the coil elements with the terminal contacts of the busbars can be carried out in the same step as connection of the terminal contacts of the plurality of coils.

Preferably, the busbars are placed in an axial direction. Therein, the axial direction of placement might be the same axial direction in which the terminal contacts of the busbar and/or the coil elements are arranged. Thus, automated placement of the busbars is feasible. In particular, first busbars along a column are placed in different layers staring from the most inner layer to the outside (or the other way around, if the busbars are placed radially inside the coil elements) before placing busbars in the next/ axially neighboring column. Thereby, Axial positioning of the busbars is possible without blocking each other. Routing of the busbars is simplified and automated assembly is possible.

Preferably, by the method a stator as previously describes is manufactured. Therein, the method can be further built along the features as described with respect to the stator described before.

Preferably, the method is carried out with an assembly jig as described before. Thus, the assembly jig may be used during arranging the coil elements on a circle in order to maintain the position of the coil elements with high accuracy.

In the following, the present invention is described in more detail with referenced to the accompanying figures.

The figures show:
- Figs. 1A - 1C: a coil element of the stator according to the present invention,
- Figs. 2A - 2C: the stator according to the present invention,
- Figs. 3A - 3C: different arrangements of terminal connectors in a detailed view,
- Fig. 4A-B: arrangement of a busbar in a detailed views,
- Figs. 5A - 5E: steps of assembly of the stator according to the present invention,
- Fig. 6: another embodiment of the axial flux machine and
- Fig. 7: another embodiment of the axial flux machine.

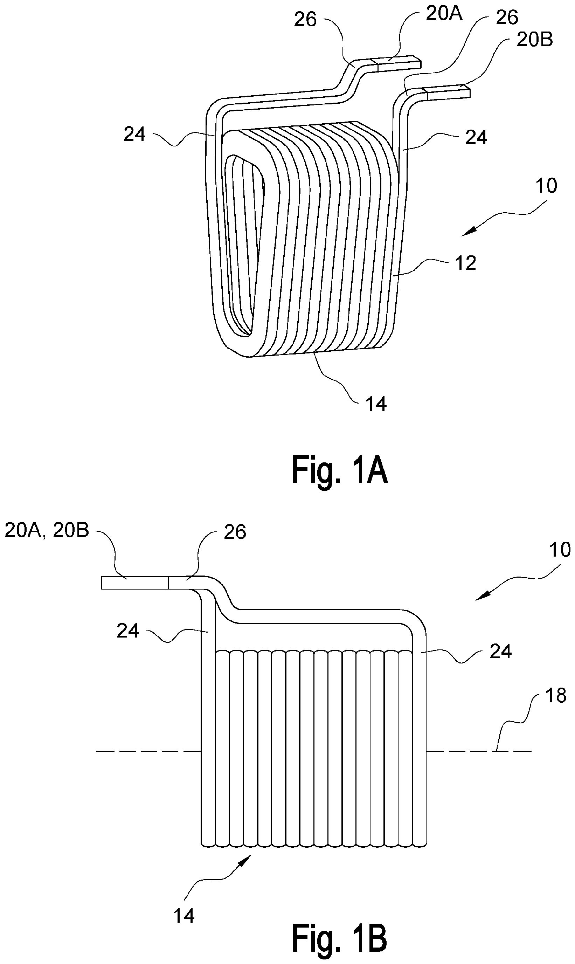

Referring to Figs. 1A - 1C showing different views of a single coil element 10. The coil element 10 is built by a conductor or conducting wire 12. The conductor 12 is arranged in windings 14 in order to form a coil. The windings 14 define an opening 16 extending along an axial direction 18 as indicated in Fig. 1B. Therein, the present invention is not limited to the specific shape of the coil elements 10 or the number of windings 14.

The conductor 12 is surrounded by an isolating layer in order to prevent shorts when contacting each other. At their respective ends, the conductor comprises a first terminal contact 20A and a second terminal contact 20B. At the terminal contacts 20A, 20B no isolation is present. At the terminal contacts 20A, 20B the coil element 10 can be connected to another coil element and/or to a busbar in order to provide a current to the coil element 10 to generate a magnetic force in particular in the axial direction 18. This magnetic field is interacting with the magnetic field of a rotor which is arranged directly adjacent to the coil elements 10 in the axial direction 18. By interacting of the magnetic fields generated by the individual coil elements 10 and the rotor, the rotor is rotated.

As shown in the Figs. 1A - 1C, the terminal contacts 20A, 20B extend into the same axial direction. Therefore, the coil element 10 comprises a contact element 23 having a radial section 24 extending perpendicular to the axial direction 18. The radial section 24 is connected to an axial section 26 extending in the axial direction and forming the terminal contacts 20A, 20B to be contacted to another coil element 10 or a busbar.

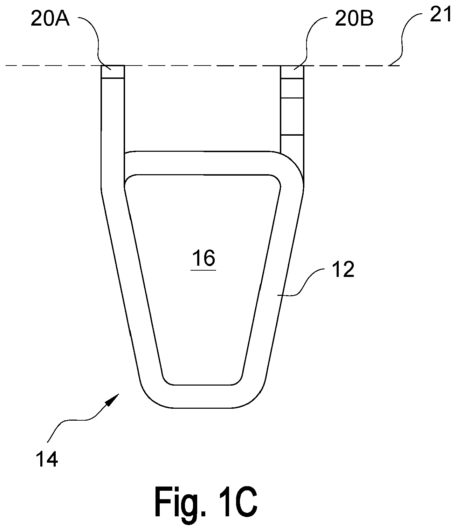

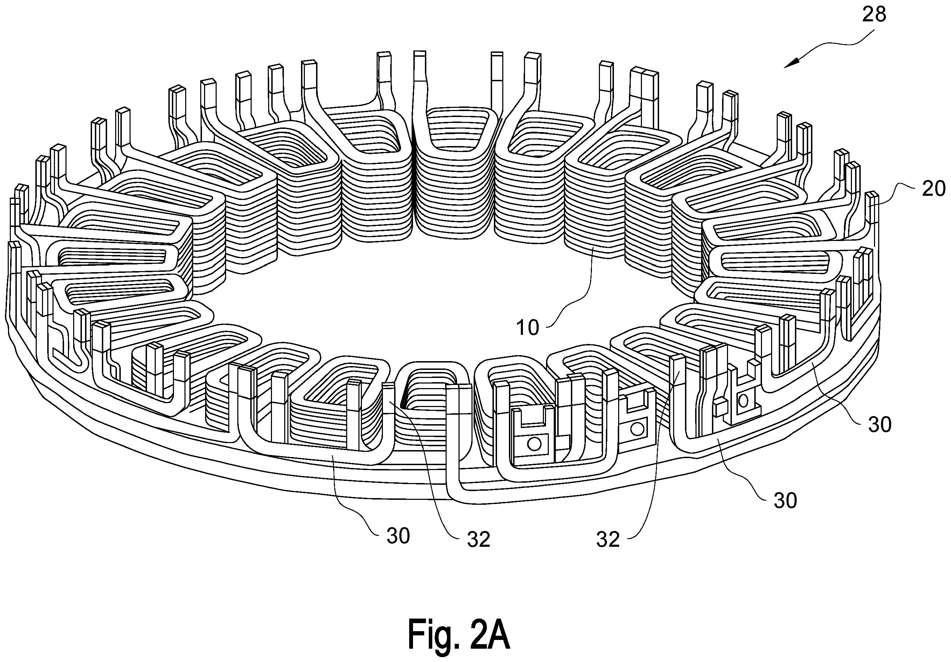

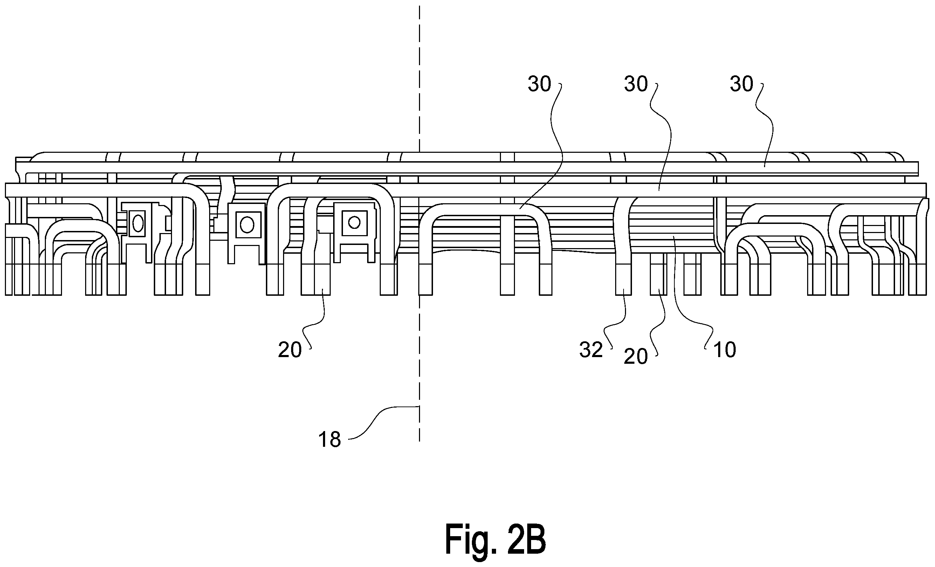

As shown in Fig 1B, the terminal contacts 20A, 20B are arranged on a same radius as indicated by the dashed line 21 in Fig. 1C. This is further shown in Figs. 2A - 2C showing the stator 28 with a plurality of coil elements 10 arranged on a circle around the axial direction 18. Therein, all terminal contacts 20A, 20B of the coil elements 10 are arranged on the same radius or arranged on adjacent radii. Further, as shown in Figs. 2A - 2C, busbars 30 are radially outside the coil elements 10, wherein each busbar 30 comprises two terminal contacts 32. As shown in Figs. 2A - 2C all terminal contacts 20 of all coil elements and also all terminal contacts 32 of all busbars 30 extend into the same axial direction and are arranged on the same radius or radially adjacent radii such that the terminal contacts 20, 32 are in direct contact with each other and accessible from one side of the stator 28. The terminal contacts 20 of the coil elements 10 extend by the same amount in the axial direction and may terminate at the same axial position. Likewise, the terminal contacts 32 of the busbars 30 also terminate at the same axial position. After arrangement of the coil elements 10 and the busbars 30, the terminal contacts 20 can be connected with each other, for example by welding, brazing, soldering, pressing or by another connecting element such as a connection ring. Thereby, the stator 28 does not need to be moved in a complex way to grant access of a connecting tool to terminal contacts 20, 32. In fact, since the terminal contacts 20, 32 are arranged on the same radius or adjacent radii, connection of the terminal contacts 20, 32 can be performed by simply turning the stator 28 around the center axis or axial axis 18. In addition, busbars 30 can be placed in an axial direction 18 also from one side simplifying the process and enabling automation.

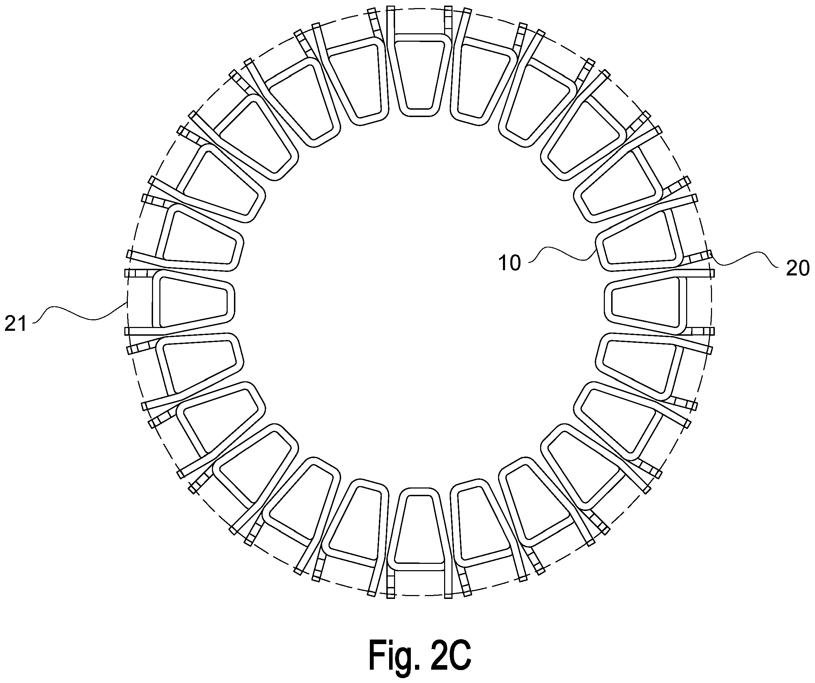

Terminal contacts 20, 32 are outside the rotor of the axial flux machine, such that the rotor of the axial flux machine can be placed axially next and in close distance to individual coil elements 10. In particular, as shown in Fig. 2A and 2C, at least one rotor element can be arranged radially within the terminal contacts 20, 32.

It must be understood that the example of Figs. 2A - 2C show a specific embodiment of the position, number and shape of the busbars 30. However, the present invention is not limited to the shown configuration and different number of busbars 30, different shapes of busbar 30 or a different arrangement of the busbars 30 is also encompassed by the present application.

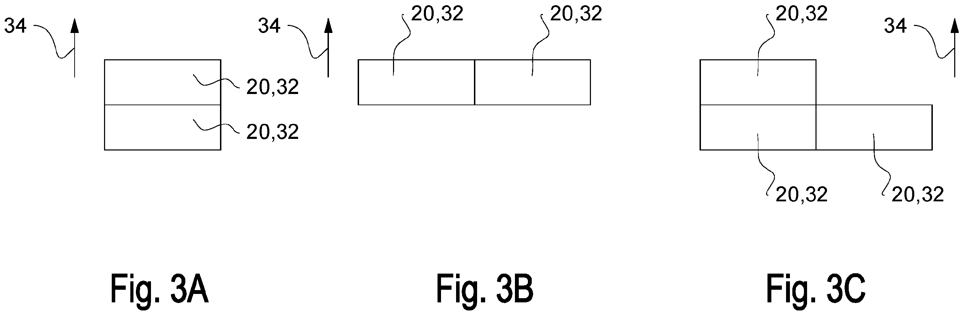

Referring to Figs. 3A - 3C showing different arrangement of terminal connectors 20, 32. Arrow 34 thereby indicating the radial direction of the stator 28. In Fig. 3A it is exemplified that a terminal connector 20 of a coil element 10 is arranged radially inside the terminal contact 32 of a busbar. However, in the same configuration two terminal contacts 20 of two adjacent coil elements 10 or two terminal contacts 32 of two different busbars 30 can be connected. Due to the direct contact between the terminal contact 20 of the coil element 10 with the terminal contact 32 of the busbar 30, these terminal contacts 20, 32 can be electrically connected in order to supply a current to the coil element 10. In another example shown in Fig. 3B, the terminal contacts 20, 32 are adjacent to each other along a perimeter of the circle 21. In the same manner as shown in Fig. 3B, also two adjacent coil elements 10 can be connected by their terminal contacts 20. In another example as shown in Fig. 3C, more than two terminal contacts 20, 32 can be connected with each other. Therein, a terminal contact 32 of a busbar 30 is directly adjacent in a radial direction with a terminal contact 20B of a first coil element 10, wherein the terminal contact 20 of the first coil element 10 is directly adjacent along a perimeter to a terminal contact 20 of a second coil element directly next to the first coil element 10. However, the same configuration can be used to connect more than one terminal contact 32 of busbars 30 to each other or respective coil elements 10. Of course, although not shown in the figures, also four terminal contacts can be in direct contact with each other. Due to the direct contact between the terminal contacts, either in a radial direction or along a perimeter, connection of the terminal contacts is feasible and can be performed in an automated manner.

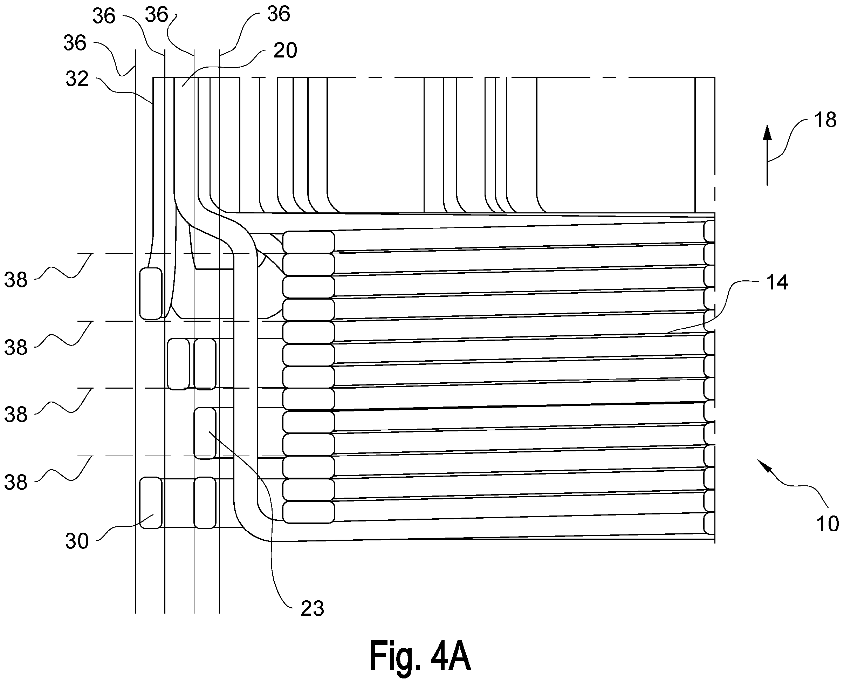

Referring to Fig. 4A showing a detailed view of the arrangement of the busbars 30. Therein, it is shown that the busbars 30 are arranged in different radial layers 36 surrounding the plurality of coil elements 10. Hence, the busbars 30can be arranged in a compact manner and can be placed from one side of the stator for simplification of the assembly process, wherein at the same time their terminal contacts 32 are able to extend in the same axial direction than the terminal contacts 20 of the coil elements 10. In addition to the radial layers 36, the busbars 30 are also arranged in axially arranged columns 38. Hence, the busbars 30 may be arranged in an orderly fashion and are radially outer the coil elements 10. Therein, the axial position of the busbars 30 coincide with the axial position of the coil elements.

In addition, it is shown in Fig. 4A that a gap is present between the windings 14 of the coil element 10 and the connection elements 23 as well as the busbars 30. Thus, circumferential flow of a coolant such as oil is possible in order to cool the stator efficiently.

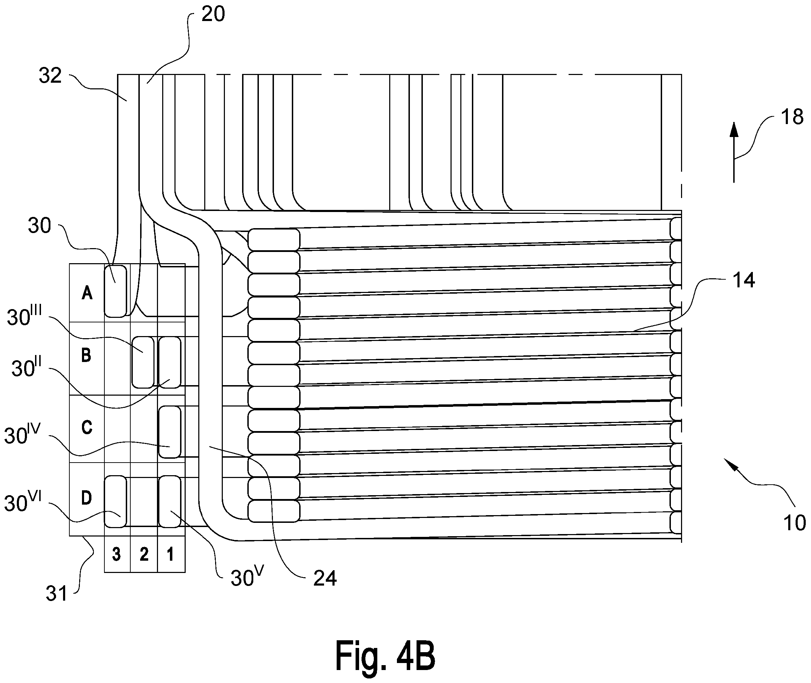

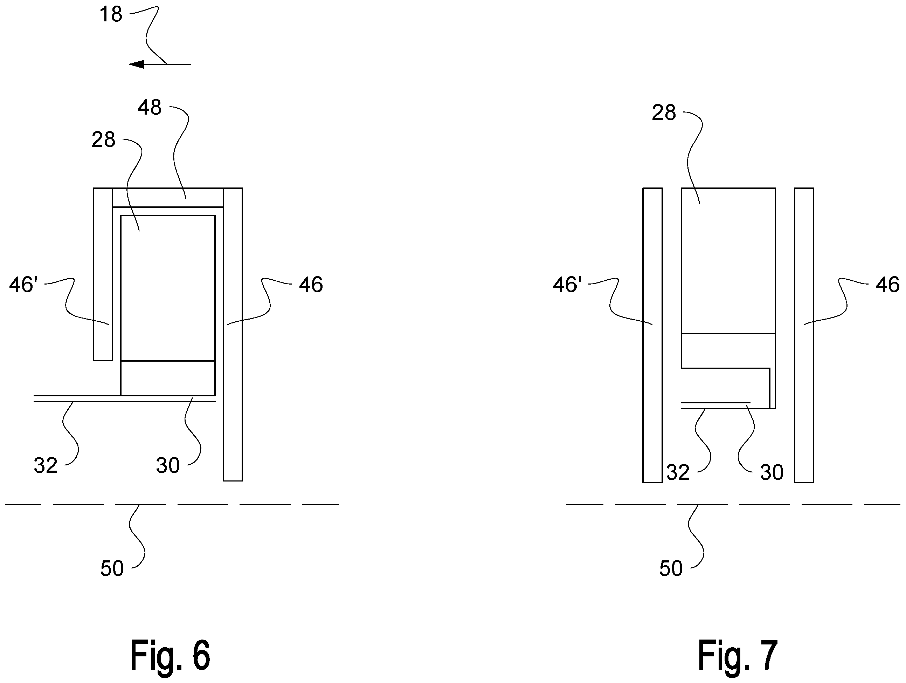

Referring to Fig. 4B showing the same section of a coil element. Busbars are arranged in layers 36 and columns 28 as shown with respect to Fig. 4B. This is also indicated by Fig. 4B denoting the position of the busbars 30 by table 31. In order to be able to place the busbars all from one side in an axial direction without one busbar blocking the positioning of another busbar, placement of the busbars is performed columnwise starting with the column in the axial direction in which the terminal contacts 20, 32 extend (denoted in table 31 as column A). Busbars 30 are placed in each column layerwise starting from the most inner layer to the outside (this is opposite, if the busbars are placed radially inside the coil elements as shown in Figs. 6 and 7). According to the denotation of table 31, busbars 30 are placed in A1, A2, A3, B1, B2, B3, C1, C2, C3, D1, D2, D3. Of course, if there are more columns or layers to place more busbars, the scheme will be adapted. Thus, in Fig. 4B first busbar 30^{I} is placed followed by 30^{II}, 30^{III}, 30^{IV}, 30^{V}, 30^{VI} in this order. None of the previously placed busbars 30 is blocking the placement of any subsequent busbars. Thus, placement of the busbars is simplified, and complex routing is avoided. Consequently, placement of busbars can be done in an automated process.

Although Figs. 4A and 4B shows three radial layer 36 and four axial columns 38 in order to arrange the plurality of busbars 30 the present invention is not limited to these specific numbers and more or less radial layers and/or more or less axial columns could be implemented where necessary.

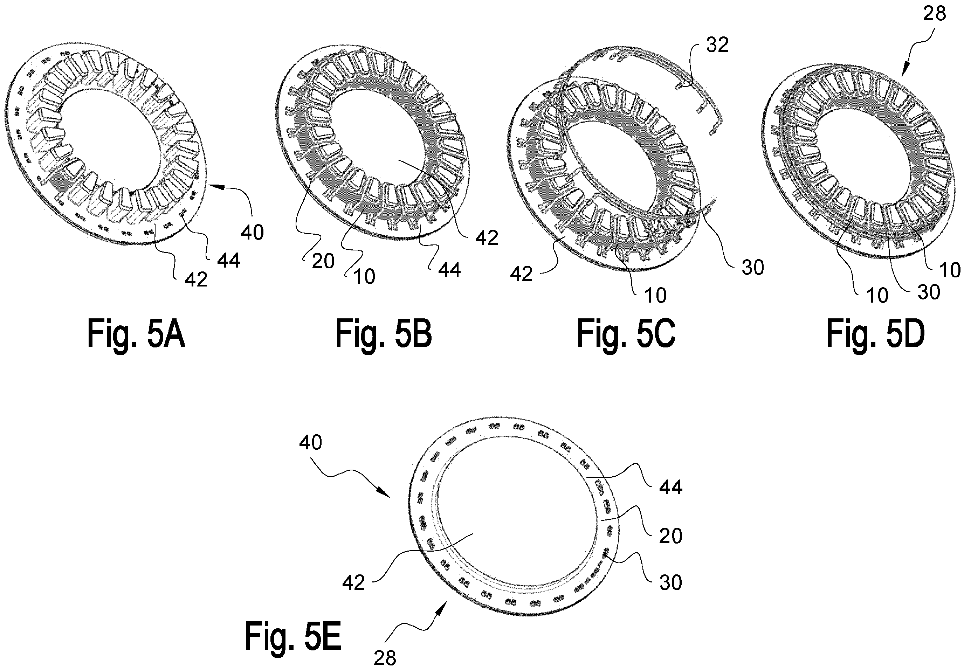

Referring to Fig. 5A - 5E showing different steps of the manufacturing process of the stator according to the present invention. In Fig. 5A, an assembly jig 40 is shown comprising a disc shape base element 42 having through-openings connecting a first side of the base element 42 with a second side opposite to the first side of the base element 42. Therein, the terminal contacts 20 of the coil elements 10 can extend through these through-openings. Therefore, the through-openings are arranged on the same radius or adjacent radii in order to receive the terminal contacts 20 of the coil elements 10. Thus, by the assembly jig 40, the coil elements 10 can be arranged on a circle. This is shown in Fig. 5B, wherein the plurality of coil elements 10 are arranged on the assembly jig 40 in order to fix their position relative to each other in a precise manner. Therein, all terminal contacts 20 extend from the first side through the base element 42 to the second sides of the assembly jig 40. As shown in Fig. 5C, subsequently the busbars 30 are arranged, wherein the terminal contacts 32 of the busbars extends also through the through-holes 44 in the base element 42 of the assembly jig 40. In Fig. 5D, the assembly of the components of the stator is finalized and the terminal contacts 20 of the coil elements 10 and/or the terminal contacts 32 of the busbars 30 are connected with each other. Therein, the stator 28 together with the assembly jig 40 need only to be rotated around the center axis or axial axis of the stator 28, thereby granting access to all terminal contacts which can subsequently welded or otherwise connected.

In a subsequent step (not shown), the assembly jig is removed. Prior to removing the assembly jig 40, a support element is connected to the stator 28 in order to fix the positions of the coil elements 10 and the busbars 20. The support element can be provided by a polymer, wherein the coil element 10 and the busbars 30 are immersed in this polymer which is subsequently cured. Terminal contacts 20, 32 are outside the rotor, such that the rotor of the axial flux machine can be placed axially next and in close distance to individual coil elements 10. In particular, as shown in Fig. 2A and 2C, at least one rotor element is arranged radially within the terminal contacts 20, 32.

Referring to Fig. 6. In this embodiment the terminal contacts 20A, 20B, 32 of the coil elements 10 and the busbars 30 are arranged radially inside the stator 28. Rotor elements 46, 46' are arranged axially next to the stator 18 on both sides and connected by a linkage element 48 radially outside of the stator 28. Therein, Fig. 6 is limited to sectional view of the axial flux machine, wherein the axis of rotation 50 is also indicated, which also serves as axis of symmetry.

Fig. 7 shows an alternative, without linkage element 48. Both rotor elements 46, 46' are connected each to a rotor hub (not shown). Terminal contacts 20A, 20B, 32 of the coil elements 10 and busbars 30 end between the rotor elements 46, 46' and do not extend axially beyond the coil elements. Thus, busbars 30 can be place between the rotors providing a compact axial flux machine.

Thus, by the stator of the present invention, manufacturing can be simplifier since all terminal contacts to be connected with each other are accessible from the same side. Hence, manufacturing of the stator can be performed in an automated process.

## Claims

1. Stator for an axial flux machine, comprising:
coil elements arranged on a circle defining an axial direction, wherein each coil element comprises one or more windings and two terminal contacts to supply a current to each of the coil elements to generate a magnetic field for interaction with a rotor of the axial flux machine,
wherein one or more terminal contacts of a plurality of coil elements are arranged in the same axial direction to be connected to another coil element and/or a busbar.

2. Stator according to claims 1, wherein both terminal contacts of the plurality of coil elements are arranged in the same axial direction.

3. Stator according to claim 1 or 2, wherein one or more terminal contacts of all coil elements are arranged in the same axial direction.

4. Stator according to any of claims 1 to 3, wherein one or more busbars are arranged radially outside or radially inside the coil elements, wherein each busbar has two terminal contacts, wherein at least one terminal contact of one or more busbars is arranged in the same axial direction as the terminal contacts of the coil elements.

5. Stator according to any of claims 1 to 4, wherein the one or more busbars are arranged in a plurality of radial layers radially outside the coil elements.

6. Stator according to any of claims 1 to 5, wherein at least two terminal contacts are arranged directly next to each other and in direct contact.

7. Stator according to any of claims 1 to 6, wherein a plurality of terminal contacts are arranged on a same radius and/or wherein a plurality of terminal contacts are arranged on adjacent radii.

8. Stator according to any of claims 1 to 7, wherein one or more coil elements comprise a contact element for each terminal contact comprising a radial section and an axial section such that the axial section of the contact element is providing the respective terminal contact.

9. Axial flux machine comprising a stator according to any of claims 1 to 8 and a rotor arranged axially next to the stator, wherein the magnetic field of the stator generated by the coil elements interacts with a magnetic field of the rotor.

10. Axial flux machine according to claim 9, wherein the stator comprises a central opening, wherein a rotor hub is arranged in the central opening and a rotor element is connected to the rotor hub extending radially and being arranged axially next to the stator, wherein preferably two rotor elements are connected to the rotor hub, wherein one rotor element is arranged on each axial side of the stator.

11. Assembly jig for manufacturing of a stator in particular according to any of claims 1 to 8, comprising
a base element having a first side and an opposite second side, wherein the first side comprises receptacles for receiving a plurality of coil elements in a predetermined arrangement along a circle,
the base element further comprising through-holes from the first side to the second side to receive terminal contacts of one or more of the plurality of coils, wherein the terminal contacts extend from the first side to the second side and are connected to each other and/or one or more busbars at the second side.

12. Method for manufacturing a stator of an axial flux machine, including:
Providing coil elements and arranging the coil elements on a circle defining an axial direction, wherein each coil element comprises one or more windings and two terminal contacts, wherein one or more terminal contacts of a plurality of coil elements are arranged in the same axial direction; and
Connecting the terminal contacts of the plurality of coil elements to each other and/or to one or more busbars from the same side.

13. Method according to claim 12, wherein the stator is only rotated around the axial axis during connection of the terminal contacts.

14. Method according to claim 12 or 13, wherein before connecting the terminal contacts, one or more busbars are provided and terminal contacts of the busbars are arranged in the same axial direction than the terminal contacts of the coil elements, wherein the terminal contacts of the busbars are directly adjacent and in contact with respective terminal contacts of the plurality of coils.
